# EUROPEAN PATENT APPLICATION

(11) **EP 1 610 518 A1**
(43) Date of publication of application: **28.12.2005**
(21) Application number: 04102831.7
(22) Date of filing: 21.06.2004
(51) Int. Cl.: H04L 29/06

(54) **Authentication system and security device**

(71) Applicant: Aboual Chamat, Ehsan, 57570 Boust (FR)
(72) Inventor: Aboual Chamat, Ehsan, 57570 Boust (FR)
(74) Representative: Beissel, Jean

(57) **Abstract**

An authentication system for authenticating a computer user to a content server comprises an interface software program to be executed on a client computer for interfacing said client computer via a network to said content server and a digital identification key, said digital identification certificate cooperating with said interface software program for authenticating said user to said content server. According to the invention, that said interface software program and said digital identification key are installed on a removable storage medium to be associated with said client computer and configured so as to be executable directly from said removable storage medium.

## Description

### Introduction

The present invention generally relates to an authentication system for authenticating a computer user to a content server and to a security device for the use in such an authentication system.

During the last decade, the number of security relevant services offered by a number of service providers on the Internet has tremendously grown. Among these services are e.g. all kinds of secure electronic transaction services, like e.g. Internet banking and the like. It is clear, that the nature of these security relevant services requires the user to be clearly identified and authenticated in order to have access to the services offered by a content server. Likewise, the content server itself should be clearly identifiable by the user prior to the revealing of confidential data such as passwords by the user.

This need for secure authentication of the user or client has led to the development of secured Internet connections based on double security certificates. Such a secured connection is based on the following principles: The Internet server or content server, e.g. of an online banking service, is identified by a server electronic certificate which is issued by a certification authority. This server certificate guarantees that the content server is effectively the server it pretends to be. A client certificate is delivered by the service provider, e.g. the online bank, which enables the content server to identify the client when a connection is established. Finally the public keys of the content server and the user are exchanged between the content server and the client computer in order to establish a protected connection.

The requirement of a client certificate in this kind of authentication system implies certain requirements to be fulfilled on the client side. The most important of these requirements is of course the correct configuration of the digital certificate in the interface software program, i.e. the web browser, which is installed on the client computer and with which the client establishes the connection to the content server.

In the case of HTTP based connections, there are actually a number of different interface software programs on the market, which enable the establishment of a connection to a remote content server, e.g. Microsoft Internet Explorer®, Netscape Navigator®, Opera®, Mozilla®, etc. Unfortunately, the management of digital security certificates is different for each of these web browsers, so that an individual configuration of the security certificate in the respective browser is required. This implies, that the user executes several more or less complex installation and configuration steps prior to being able to connect to the content server. This requirement of individual configuration first of all bears the risk of erroneous configuration, which may lead to the consequence, that the client is unable to connect to the remote content server and use the respective service and/or, even worse, that confidential security related information is openly accessible on the client computer. Furthermore, the complex configuration requirement reduces the flexibility of the system with regard to the possibility for the user to connect to the service from different client computers. Finally, this solution bears the risk that, after the termination of the connection, the certificate and even temporary files relating to the connection remain on the computer that was used for establishing the connection. It follows that the present system is not adapted for today's increasing need for flexibility and mobility.

Other solutions have been proposed, wherein the digital certificate is stored on a smart card and thus easily transportable from one computer to another. However this solution requires smart card readers being installed and correctly configured on each of the computers to be used for establishing a secure connection. Furthermore, the user must first configure the interface software program installed on the respective computer so as to read the certificate from the smart card, which again requires more or less complex configuration steps.

Hence there is a need for an improved authentication system, which increases the flexibility with respect to the use of every computer connected to a respective network.

### Object of the invention

The object of the present invention is accordingly to provide an improved authentication system and security device for authenticating a computer user to a content server.

### General description of the invention

In order to overcome the abovementioned problems, the present invention proposes an authentication system for authenticating a computer user to a content server, comprising an interface software program to be executed on a client computer for interfacing said client computer via a network to said content server and a digital identification key, said digital identification certificate cooperating with said interface software program for authenticating said user to said content server. According to the invention, said interface software program and said digital identification key are installed on a removable storage medium to be associated with said client computer and configured so as to be executable directly from said removable storage medium.

In another aspect, the present invention relates to a security device for authenticating a computer user to a content server, said security device comprising a removable storage medium to be associated with a client computer. The removable storage medium comprises an interface software program and a digital identification key installed thereon, said interface software program to be executed on said client computer for interfacing said client computer via a network to said content server and said digital identification key for cooperating with said interface software program for authenticating said user to said content server. According to the invention, said interface soffiware program and said digital identification key are installed on said removable storage medium and configured so as to be executable directly from said removable storage medium.

In contrast to the known authentication systems and security devices, the present invention is based on an interface software program and an identification key, which are installed on the removable storage medium so as to be executable directly from said removable storage medium. It follows that the interface software program and the identification key are immediately operable as soon as the removable storage medium is associated to a computer from which the connection to the content server has to be established. There is no need to install a specific interface software program on the co mputer or to install the identification key into an existing interface software program on the computer. No previous installation or configuration steps by the user are thus required prior to be able to connect to the server from any possible computer, so that the user benefits from a total flexibility with respect to the computer from which he intends to establish a connection to the content server and use the corresponding online service. The solution of the present invention is thus specifically adapted to conform to the user's increasing desire for total mobility and flexibility to access specific services from any computer overall in the world. Any computer, which may connect to the network containing the content server, may be used as soon as the removable storage medium may be associated to this computer.

Further to the increased flexibility as to the computer from which to access the online service, the present invention provides also an increase security against involuntary disclosure of confidential information. In fact, as the software interface program and the identification key are both installed and preconfigured on the removable storage medium, no configuration or installation errors may occur during an initial installation and configuration attempt by the user. Thus the risk of leaving confidential information openly readable on the client computer due to a configuration or installation error is avoided with the present invention.

Furthermore, since the connection to the content server is established using a dedicated interface software program installed on the removable storage medium, the parameters and configuration of this interface software program may be optimised for increased security. This is usually not the case with commonly installed interface software programs (like web browser programs) installed on most of the computers, which are usually configured for improved usability and compatibility with multimedia content and the like. The interface software program installed on the removable storage medium of the security device does not need to be configured for compatibility with all kind of multimedia or scripting features, which may be encountered on the Internet. Accordingly the parameters of the interface software program may be optimised for maximum security.

It should be noted in this context, that the expression "dedicated interface software program" does not mean, that the interface software must be a specific software which is individually developed for the use of the respective online service. On the contrary, for economical reasons, the interface software program should rather be a standard interface software like any suitable web browser e.g. Microsoft Internet Explorer®, Netscape Navigator®, or the Internet browsers from Opera® and Mozilla®, etc. The expression "dedicated interface software program" thus refers only to the fact, that the interface software program installed on the removable storage medium is a specific instance of such standard interface software, dedicated only to the establishment of the secure connection, the authentication of the user and the access to the corresponding online service. In other words, the interface software program installed on the removable storage medium may be the same as the web browser already installed on the computer from which the secure connection is to be established. However, for the establishment of the specific secure connection, only the interface software of the removable storage medium is used. It will further be appreciated, that the digital identification key may comprise a conventional security certificate, as they are commonly used in double security certificate systems. It will finally be noted that in the context of the present invention, the expression "content server" has to be understood broadly as including any possible hardware device containing remotely accessible information. This means that a content server may e.g. comprise a typical banking server, a database server, a mail server, etc. In one possible embodiment, the content server may also comprise a remotely manageable hardware device, wherein the remotely accessible information of the content server includes e.g. the remotely accessible configuration parameters or log files of the hardware device.

The removable storage medium may comprise any storage device, which is compatible to the computer, from which the specific online service is to be accessed. Accordingly it is preferable to choose a removable storage device, which is compatible to most of current computer architectures. The removable storage device may for instance comprise a standard CD-Rom, which is readably by a conventional CD-reader installed on almost every up to date PC. The use of a CD-Rom has e.g. the advantage, that the entire interface software and the identification key are write protected and as a consequence may not be altered by an intruder to jeopardize the secure character of the connection. Alternatively, the removable storage device may be an external hard disk, which may be connected to the computer e.g. via a standard IEE 1394 interface.

In a preferred embodiment of the invention, the said removable storage medium comprises a USB memory device, e.g. a USB memory stick. The USB standard is actually implemented in any up to date personal computer and compatible with standard operation systems like Microsoft Windows® and the like. The USB memory sticks do not need specific installation routines; they are simply recognized and accessible by modern operating systems as removable hard disks. It follows that USB memory devices provide a very high compatibility with every standard up-to-date PC and accordingly are well suited for ensuring the high flexibility sought by the present invention. Furthermore USB memory sticks are extremely reliable, very robust and insensitive to mechanical shock and environmental conditions, which makes them extremely suitable for ensuring high portability. A major advantage of the USB memory devices with respect to CD-Rom is the fact that USB memory devices are not read-only storage devices. The fact that USB memory sticks are re-writable enables e.g. the interface software program to be configured so as to write any temporary files during the connection in a location of the USB memory device and not in the standard temporary folder of the computer. This ensures that after the closing of the secure connection and the removal of the removable storage medium, no temporary files containing confidential information may remain on the computer and thus provides increased security against hackers and the like.

In a preferred embodiment of the invention, digital identification key is password protected. In this case, the interface software program is chosen so as to provide the possibility of protecting the identification key by a user password. This feature is already integrated in some of the available web browsers such as e.g. the open source browser Mozilla. Password protection of the digital identification key further ensures that the secure connection may only be established after the encoding of the correct user identification password. This prevents the possibility of misuse of the security device by unauthorized persons.

In order to prevent hackers to modify parts of the interface software program in order to get unauthorized access to the content server and the related online service, it is preferable to protect the integrity of the files at risk (such as executable files or dynamic link libraries, etc.) of the interface software program. One possible implementation of such integrity protection may be based on one or more files of said interface software program being redundantly stored on said removable storage medium, one copy of said redundantly stored files being stored in an executable directory and a second copy of said files being stored in an archive file. The removable storage medium then preferably comprises means for copying said redundantly stored files from said archive to said executable directory. The means for copying the redundantly stored files from said archive to said executable directory preferably comprise a security application which is executed prior to the execution of the interface software itself. In a possible embodiment, the security application may be entirely integrated into the interface software program. In an alternative embodiment, the security application is a specific program wherein the interface software program is configured so as to be only executable by the security application or after the security application has been started. It is then impossible to circumvent the copying of the archived files into the executable directory, thus deleting every file at risk which might have been altered by hackers or by malicious code of a computer virus e.g. during the last connection to the network. It will be noted that the copy operation of the redundantly stored files may be done at any suitable time, e.g. prior to the execution of the interface software program or after the termination of the connection and the closing of the interface software, etc. It will further be appreciated, that the archive file is preferably write protected and/or encrypted and/or password protected so as to avoid undesired modification of the files stored in the archive. Likewise, it is preferred that the security application is write-protected in order to prevent alteration of the corresponding files by hackers or malicious code. The security application could e.g. be installed in a write-protected area of the removable storage device, e.g. in a write-protected area of a USB memory device. In order to avoid the risk of unauthorized manipulation of the write protection, this write-protection of a specific area of the USB memory device is preferably achieved on the hardware level.

In a further embodiment ensuring the integrity of files at risk of the interface program and/or the identification key, a check sum is associated with one or more files of said interface software program and/or said digital identification key and/or said archive file. In this case said removable storage medium comprises means for comparing said check sum to a reference value. The reference value may be stored on the removable storage medium itself, which enables the security application to verify the checksum prior to the execution of the interface software program. Alternatively, the reference value for the check sum is located on a security server or on the content server itself. In this case, the check sum of the different files may be verified after the establishment of the connection to the respective server but prior to the grant of access to the content of the content server.

Given the above described features and advantages, the present invention is perfectly suited to be used for the establishment of a secure connection to an online banking server. It will however be noted, that the principle of the present invention may also be used in other security relevant network services, as e.g. secure electronic mail, wherein the content server is a mail server, the interface software program is a mail client and the identification key is e.g. a digital signature. Alternatively, the content server may comprise a remotely manageable hardware device, which can be configured and managed e.g. via a web interface. In this case, the security device of the present invention provides a easy to use means for secure authentication of the authorized administrator of the hardware device.

### Detailed description with respect to the figures

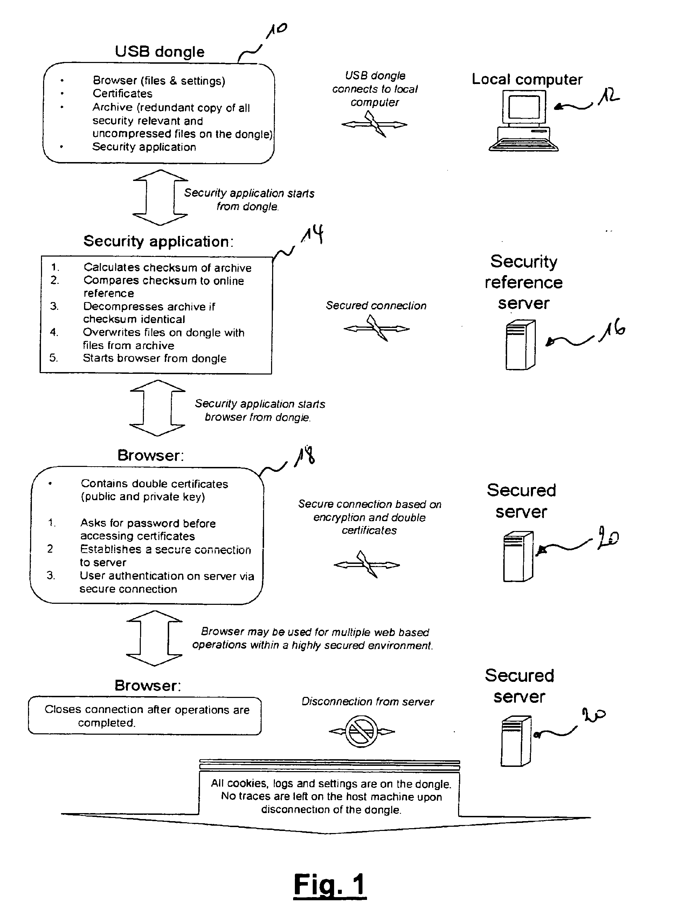

The present invention will be more apparent from the following description of a not limiting embodiment with reference to the attached figure 1, which shows the different steps of the establishment of a secure connection in a block diagram.

A security device according to the present invention comprises a USB memory stick 10, which contains an interface software program, like e.g. a web browser, and a digital identification key such as a security certificate installed thereon. The interface software program may comprise a plurality of files, which are stored in uncompressed form in an executable directory of the USB memory stick. Some of the files of the interface program, preferably all the files at risk such as e.g. all the executable files and the dynamic link libraries, are preferably redundantly stored in compressed form in an archive file. In the shown embodiment, the USB memory stick further comprises a security application, which at suitable moments enables the files at risk of the executable directory to be deleted and replaced by the files of the compressed archive.

The USB memory stick may e.g. be provided by an online service provider, which grants the client an access to a specific online service and which issues the certificate for this purpose.

In order to access to the specific online service, the user inserts the USB memory stick into a suitable slot of any local computer, which is able to connect via network to a content server associated to the online service. Once the USB memory stick is recognized by the local computer, the user may execute the security application installed on the USB stick, whereupon one or more of the steps shown under reference numeral 14 are executed. The security application may e.g. calculate the checksum of the archive and, after having established a connection to a security reference server 16, compare the calculated checksum with the reference value stored on the security reference server. If the integrity of the archive file is verified by this procedure, the security application may decompress the archive into the respective executable directory, whereby the respective files of the executable directory are overwritten. This process ensures that the files at risk of the interface program are the original files as any file, which might have been altered by a hacker, is deleted and replaced by the original file.

Only after this step of restoring the original files into the executable directory, the security application starts the interface program in order to connect to the content server associated to the online service.

Upon start of the interface software program (browser) and after the input of the correct password giving access to the certificates, this browser 18 accesses the certificates installed in the browser and establishes the secure connection to the content server. The user is then authenticated by the content server based on the certificates installed in the browser and may access to the desired service.

After the different transactions relating to the online service, the user closes the connection, disconnects from the content server and closes the browser.

If suitably configured, the interface software stores all the temporary files during the execution of the browser and the operations in the secure environment on the USB memory stick. It follows that during transactions, no files are created, modified or deleted on the host computer. This provides the advantage that all temporary files, which may remain after the end of the operation (cookies, logs etc), are solely stored on the USB stick and that these files are accordingly no longer accessible from the computer once the USB stick is removed after the transactions. Thus no traces of the previous connections are left on the local computer after the USB stick is finally removed from the system.

## Claims

1. Authentication system for authenticating a computer user to a content server, comprising an interface software program to be executed on a client computer for interfacing said client computer via a network to said content server and a digital identification key, said digital identification certificate cooperating with said interface software program for authenticating said user to said content server, **characterised in that** said interface software program and said digital identification key are installed on a removable storage medium to be associated with said client computer and configured so as to be executable directly from said removable storage medium.

2. Authentication system according to claim 1, wherein said removable storage medium comprises a USB memory device.

3. Authentication system according to any one of claims 1 or 2, wherein said digital identification key is password protected.

4. Authentication system according to any one of claims 1 to 3, wherein one or more files of said interface software program are redundantly stored on said removable storage medium, one copy of said redundantly stored files being stored in an executable directory and a second copy of said files being stored in an archive file, and wherein said removable storage medium comprises means for copying said redundantly stored files from said archive to said executable directory.

5. Authentication system according to claim 4, wherein said archive file is write protected and/or encrypted and/or password protected.

6. Authentication system according to any one of claims 1 to 5, wherein a check sum is associated with one or more files of said interface software program and/or said digital identification key and/or said archive file, and wherein said removable storage medium comprises means for comparing said check sum to a reference value.

7. Security device for authenticating a computer user to a content server, said security device comprising a removable storage medium to be associated with a client computer, said removable storage medium comprising an interface software program and a digital identification key installed thereon, said interface software program to be executed on said client computer for interfacing said client computer via a network to said content server and said digital identification key for cooperating with said interface software program for authenticating said user to said content server, wherein said interface software program and said digital identification key are installed on said removable storage medium and configured so as to be executable directly from said removable storage medium.

8. Security device according to claim 7, wherein said removable storage medium comprises a USB memory device.

9. Security device according to any one of claims 7 or 8, wherein said digital identification key is password protected.

10. Security device according to any one of claims 7 to 9, wherein one or more files of said interface software program are redundantly stored on said removable storage medium, one copy of said redundantly stored files being stored in an executable directory and a second copy of said files being stored in an archive file, and wherein said removable storage medium comprises means for copying said redundantly stored files from said archive to said executable directory.

11. Authentication system according to claim 10, wherein said archive file is write protected and/or encrypted and/or password protected.

12. Authentication system according to any one of claims 7 to 11, wherein a check sum is associated with one or more files of said interface software program and/or said digital identification key and/or said archive file, and wherein said removable storage medium comprises means for comparing said check sum to a reference value.
